# EUROPEAN PATENT SPECIFICATION

(11) **EP 1 026 028 B1**
(45) Date of publication and mention of the grant of the patent: **26.10.2005**
(21) Application number: 00101862.1
(22) Date of filing: 31.01.2000
(51) Int. Cl.: B60N 2/22

(54) **Device for securing an adjustable back of a seat to a motor vehicle body**
Vorrichtung zum Befestigen einer verstellbaren Sitzrückenlehne an einer Kraftfahrzeugkarosserie
Dispositif pour fixer un dossier de siège réglable à la carrosserie d'un véhicule automobile

(30) Priority: 02.02.1999 IT TO990076
(43) Date of publication of application: 09.08.2000
(73) Proprietor: INTIER AUTOMOTIVE CLOSURES S.p.A, 10090 Cascine Vica-Rivoli (To) (IT)
(72) Inventor: Sbrana, Roberto, 56100 Pisa (IT); Taviani, Corrado, 50054 Fucecchio (IT)
(74) Representative: Franzolin, Luigi

(56) References cited:
- US-A- 3 299 466
- US-A- 3 508 294
- US-A- 3 833 965
- US-A- 4 147 386
- US-A- 5 460 429
- US-A- 5 813 725

## Description

This invention concerns a device for securing an adjustable back of a seat, in particular a rear seat, to the body of a motor vehicle.

There are known securing devices, generally comprising a locating pin attached to the body of the motor vehicle and an attachment mechanism mounted on the seat back and designed to engage with the locating pin.

The securing mechanism basically comprises a base unit attached to the body of the motor vehicle, a fork pivoting on the base unit about a first fixed pin and having jaws to engage a portion, generally cylindrical, of the locating pin mentioned above, and a stop pivoting on the base unit about a second fixed pin and spring loaded to snap into an edge on the periphery of the fork.

In particular, the fork is loaded by a spring towards a rest position in which it allows engagement and disengagement between the cylindrical portion of the locating pin and the jaws of the fork, and can rotate about the first pin over a distance where it is in engagement with the stop to assume a first and a second attachment position, corresponding to different positions of attachment of the back to the body, in which the cylindrical portion of the locating pin is locked in the jaws of the fork.

The stop is designed to snap into engagement sectors on the edge of the periphery of the fork to lock the fork in a releasable manner in the first and second attachment positions mentioned above.

Because of the constraints imposed by the geometry of the fork and of the stop and by the movement characteristics of the attachment mechanism,securing devices of the above type do not allow more than two positions for securing the back to the body to be obtained, and furthermore these are arranged at a relatively small angular distance apart.

Alternatively, there are securing devices known which basically comprise an elongated positioning plate fixed to the body and having a number of through holes determining a range of adjustment of the position of the back, and a pin mounted on the back, loaded axially by means of a spring device and designed to snap into the holes in the positioning plate to determine different positions for securing the back to the body.

These securing devices, while allowing the position of the back to be adjusted with relative ease, with the possibility of obtaining a relatively large number of securing positions arranged at the desired angular distances from each other, are nevertheless somewhat noisy, being subject to vibration in particular, because of the need to provide suitable clearances between the pin and the holes. Moreover, when adjusting the position of the back, finding the desired securing position may be a relatively long process, since the pin tends to engage in the first hole which it encounters.

The aim of this invention is to produce an attachment device for securing an adjustable back of a seat to a motor vehicle body, which enables the disadvantages connected with the known securing devices specified above to be eliminated simply and economically.

The above aim is achieved by this invention in that it relates to a device for securing an adjustable back of a seat to a motor vehicle body, comprising positioning devices mounted on one of either the back or the body and an attachment mechanism mounted on the other of either the back or the body and designed to act in conjunction with the positioning devices, this attachment mechanism comprising:
- a base unit;
- a fork pivoting on this base unit about a first fixed pin provided with jaws to engage these positioning devices and pressed by a first spring device towards a rest position in which engagement and disengagement between the jaws and the positioning devices are permitted; and
- a stop pivoting on the base unit about a second fixed pin, loaded by a second spring device towards the fork and designed to snap into engagement with the fork to lock it in a releasable manner into an attachment position in which the positioning devices are engaged with the jaws;
characterised in that these positioning devices comprise a number of locating pins arranged along the length through which the position of the seat back can be adjusted with respect to the vehicle body and designed to engage with the fork in the attachment position to determine different positions for securing the back to the body, and that the fork can rotate about the first pin against the action of the first spring devices between the first and second operating position arranged at an angle on opposite sides of the rest and attachment positions, so as to enable the locating pins and the fork to slide relative to each other during movements of the seat back between adjacent securing positions.

For a better understanding of this invention, a preferred embodiment is described below, purely as a non-limiting example and with reference to the attached drawings, in which:
- figure 1 illustrates in a side view and with parts removed for clarity, a device for securing an adjustable back of a seat to a motor vehicle body;
- figure 2 is a section along the line II - II in figure 1;
- figures 3 to 5 illustrate in side views and with parts removed for clarity, the securing device in figure 1 in three different operating configurations; and
- figure 6 illustrates in a side view a possible variant of an attachment mechanism for the securing device in figure 1, in the rest configuration.

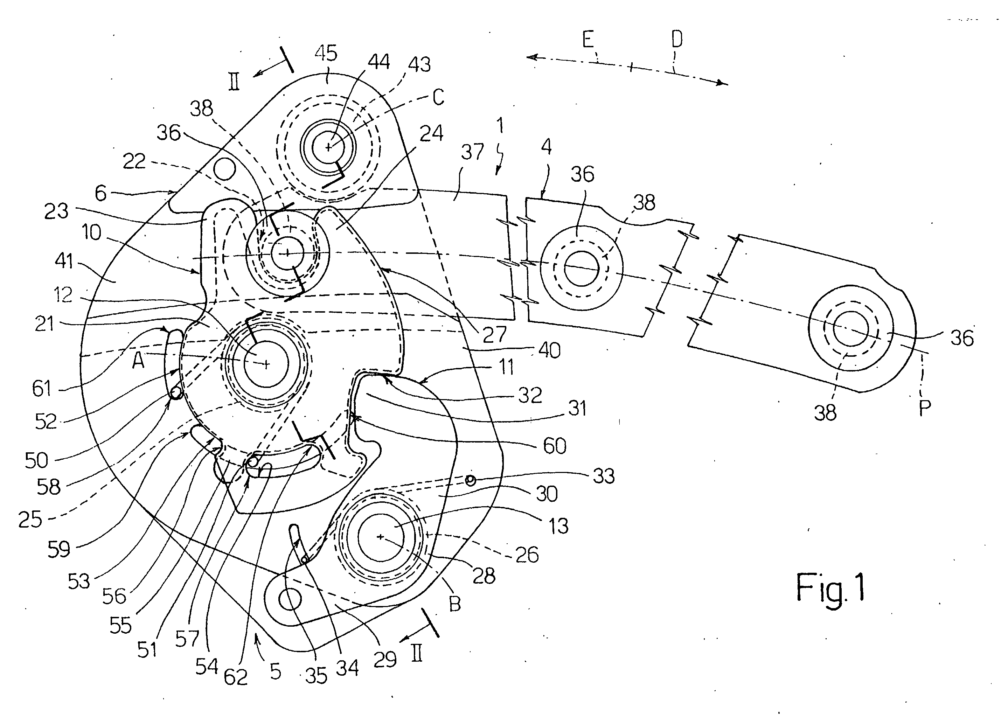

With reference to figures 1 to 5, the number 1 indicates in its entirety a device for securing an adjustable back 2 of a rear seat (only partially illustrated) to a motor vehicle body 3 (not illustrated).

The device 1 comprises a positioning rail 4 designed to be fixed to the body 3 and an attachment mechanism 5 mounted on the back 2 and designed to act in conjunction with the positioning rail 4 to determine a number of positions, in the present case three, for securing the back 2 to the body 3.

The attachment mechanism 5 comprises a base unit 6 substantially in plate form and designed to be fixed to the seat back 2, and a fork 10 and a stop 11 pivoting respectively about fixed pins 12, 13, which are permanently attached to the back 2 and to the base unit 6 and have respective axes A and B parallel with each other and at right angles to the base unit 6.

More precisely, each pin 12, 13 is fitted centrally into its own through hole, 14, 15, in the base unit 6 and has portions 16, 17 projecting on either side of the base unit 6; the portions 16 of pins 12, 13 are fitted into holes 18, 19 in the fork 10 and the stop 11 respectively, and are riveted to a portion of the back 2 having the form of a plate.

The fork 10 consists of a shaped plate of metal material coated externally with plastic material, is pivoted at an intermediate portion 21 on the pin 12 and has C-shaped jaws 22 on its periphery designed to act in conjunction with the positioning rail 4 and bounded at the sides by two prongs 23, 24.

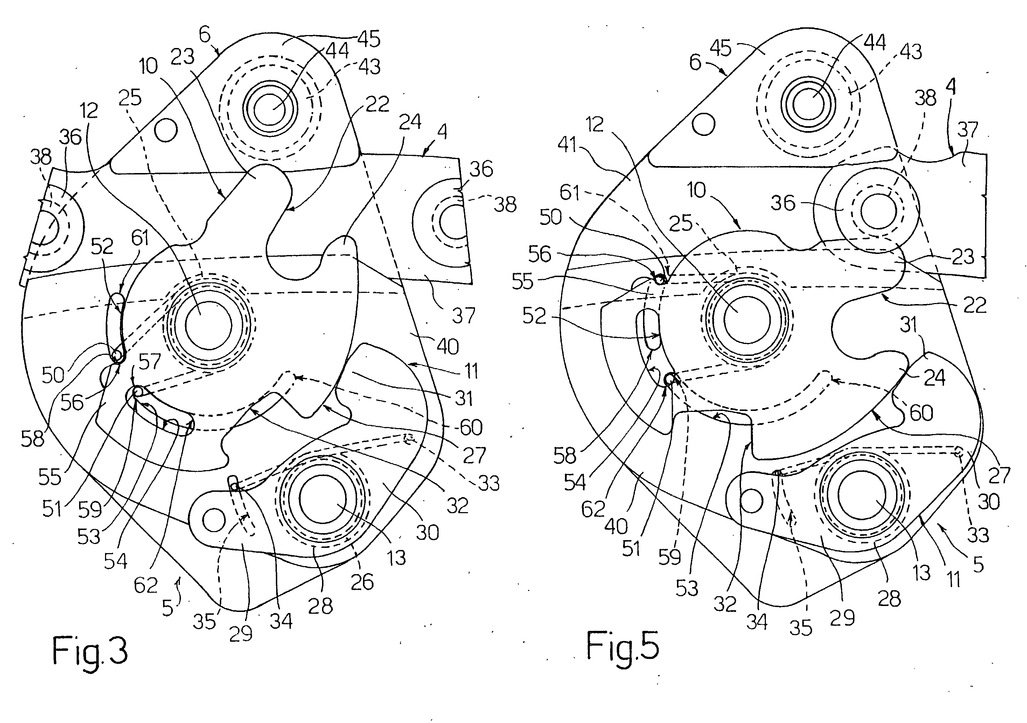

Moreover, the fork 10 is pressed by a spring 25 wound around the portion 17 of pin 12, towards a rest position (figure 3) in which engagement and disengagement between the positioning rail 4 and the jaws 22 are permitted.

The stop 11 consists of a shaped plate, substantially co-planar with the fork 10 and produced of metal material, is arranged on the opposite side of the fork 10 relative to the positioning rail 4 and is loaded by a spring 26 wound around the portion 17 of pin 13, towards an edge 27 on the periphery of the fork 10.

The stop 11 comprises an intermediate portion 28 pivoting on pin 13, an operating arm 29 extending from the portion 28 and designed to be connected to a control device (not illustrated) for releasing the securing device 1, and an arm 30 to act in conjunction with the fork 10, substantially L-shaped and extending on the opposite side of the portion 28 relative to the arm 29.

At one free end, the arm 33 has an engagement portion 31 designed to snap into a recess 32 made in the edge of the periphery 27 of the fork 10 so as to lock the fork 10 in a releasable manner in an attachment position in which the positioning rail 4 is kept engaged with the jaws 22 (figure 1).

The spring 26 has a first attachment portion 33 fixed to the base unit 6 and a second attachment portion 34 bent in a direction parallel to the axis B and engaged and able to slide in an elongated slot 35 made in the base unit 6 and having substantially the shape of an arc of circumference with the centre of curvature coinciding with axis B.

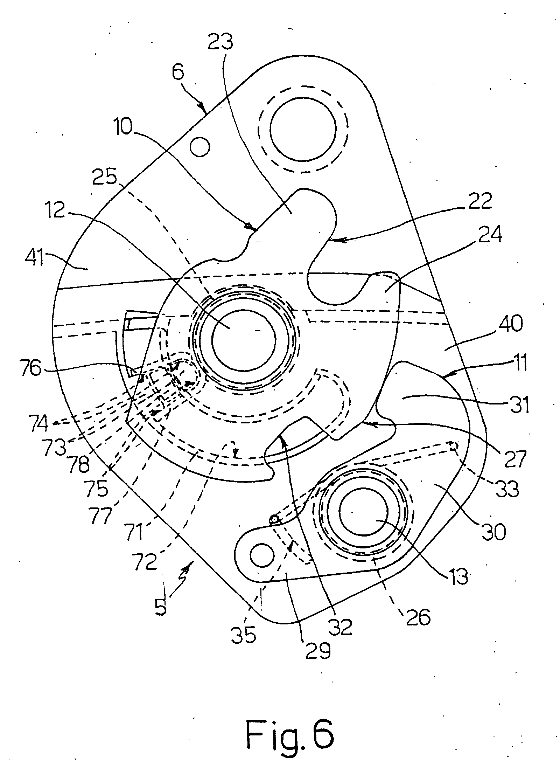

According to this invention, the positioning rail 4 comprises a number of locating pins 36, three in the present case, arranged along the length P through which the position of the seat back 2 can be adjusted with respect to the body 3 and designed to engage with the fork 10 in the attachment position to determine the different positions for securing the back 2 to the body 3, and the fork 10 is able to rotate about pin 12 against the action of spring 25 between a first and a second operating position (figures 4 and 5 respectively) arranged at an angle on opposite sides of the rest and attachment positions, so as to allow the locating pins 36 and the fork 10 to slide relative to each other during movements of the back 2 between adjacent securing positions; more precisely, the attachment position of the fork 10 is placed at an angle between the rest position and the first operating position of the fork 10.

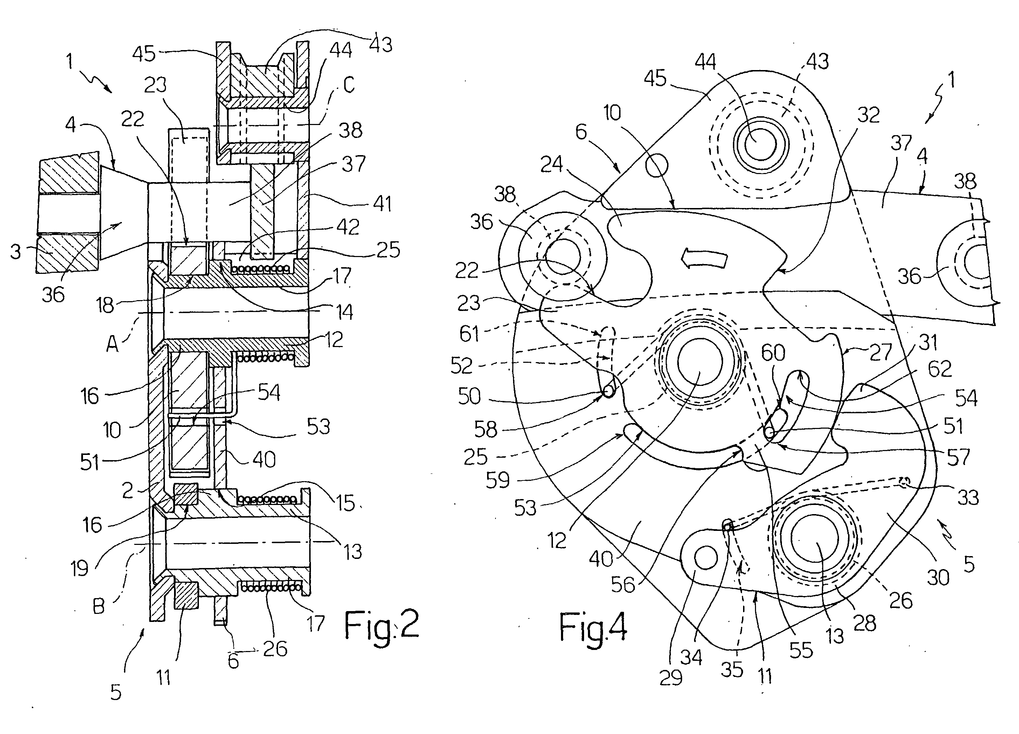

With particular reference to figure 2, the locating pins 36, of substantially cylindrical shape, are fixed at one end to the body 3, for example by welding, and are connected to each other at the opposite end by an elongated curved plate 37 extending at right angles to the locating pins 36 and determining the range P of adjustment of the position of the back 2. Each locating pin 36 is designed to operate in conjunction with the jaws 22 of the fork 10 by means of a cylindrical intermediate portion of the pin, 38, which extends towards the body 3 in the form of a truncated cone with the larger diameter facing towards the body 3 and arranged so as to bear against the latter.

The base unit 6 comprises two portions 40, 41 flat and parallel, with a stepped connection to each other through an intermediate portion 42 at right angles to portions 40, 41; in.particular, portion 40 is provided with holes 14, 15 for pins 12, 13 on which the fork 10 and the stop 11 pivot, and also with slot 35 for the attachment portion 34 of spring 26.

The portion 41 has secured to it an idler roller 43 with an axis C parallel to axes A and B, forming together with portion 42 a section giving sliding engagement with plate 37 of the positioning rail 4; the plate 37 therefore constitutes a guide for movement of the back 2 along the length P. More particularly, the roller 43 is fitted so that it can rotate on a pin 44 which is in turn fixed between portion 41 of the base unit 6 and the plate 45 facing and secured to portion 41.

With reference to figures 1 to 5 the spring 25 has opposite portions of attachment 50, 51 bent so as to extend parallel to the axis A and engaging and able to slide in the elongated curved slots 52, 53, which are made in the portion 40 of the base unit 6 and extend along arcs of a circumference having a centre of curvature coinciding with axis A. The attachment portions 50, 51 of spring 25 both project from portion 40 of the base unit 6 and, in addition, the attachment portion 51 is engaged and able to slide in a further elongated slot 54, substantially in the shape of an arc of circumference, made in the fork 10 on the side opposite to the jaws 22 and having the same radius of curvature as slots 52, 53 with respect to axis A.

The attachment portions 50, 51 of spring 25 are therefore designed to act in conjunction on opposite sides with an interaction portion 55 of the fork 10, which is bounded laterally, in the direction of the attachment portion 50, by a shoulder 56 in the edge of the periphery 27 of the fork 10 and, in the direction of the attachment portion 51, by an edge 57 at the end of slot 54 adjacent to shoulder 56.

In the rest position of the fork 10 (figure 3), the attachment portions 50, 51 of spring 25 are arranged to bear against respective edges 58, 59 at the adjacent ends of slots 52, 53 and act in opposite directions in conjunction with the interaction portion 55 of the fork 10.

During the rotation of the fork 10 between the rest position -and the first operating position, the attachment portion 50 of spring 25 is arranged to bear against the edge 58 of slot 52, while the attachment portion 51 is able to move inside slot 53 under the thrust of the interaction portion 55, in particular of the edge 57 at the end of the slot 54.

In a different way, during rotation of the fork 10 between the rest position and the second operating position, the attachment portion 51 of spring 25 is arranged to bear against the edge 59 of slot 53, while the attachment portion 50 is able to move inside slot 52 under the thrust of the interaction portion 55, in particular of the shoulder 56 on the edge of the periphery 27 of fork 10.

Therefore, slot 53 has an angular extension with respect to axis A at least equal to the angular distance between the rest position and the first operating position of fork 10, while slots 52, 54 have an angular extension with respect to axis A at least equal to the angular distance between the rest position and the second operating position and less than the angular extension of slot 53.

The first and second operating positions mentioned above are determined by the interaction of the stop pins 36 with prongs 23 and 24 respectively (figures 4 and 5 respectively). Moreover, in the first operating position of the fork 10, the attachment portion 51 of spring 25 is held by the interaction portion 55, in particular by the edge 57 of slot 54, close to an edge 60 at the end of slot 53 opposite the edge 59 (figure 4), while in the second operating position of fork 10, the attachment portion 50 of spring 25 is held by the interaction portion 55, in particular by the shoulder 56 on the edge of the periphery 27 of the fork 10, close to an edge 61 at the end of slot 52 opposite to the end 58 and it is arranged to bear against an edge 62 at the end of slot 54 opposite the edge 57 (figure 5).

Operation of the securing device 1 is described on the basis of the configuration in figure 1, in which the back 2 is arranged in an end securing position determined by the attachment between the jaws 22 of the fork 10 and a corresponding stop pin 36 at the end of the positioning rail 4; more precisely, the fork 10 is held in its position of attachment to the end stop pin 36 mentioned above by the engagement of portion 31 of arm 30 of the stop 11 with the recess 32 in the fork 10.

To change to the adjacent securing position along length P, it is necessary to operate the arm 29 of the stop 11 so as to disengage portion 31 from the recess 32 in the fork 10 and to move the back 2 with respect to the vehicle body 3 so as to slide the base unit 6 along the plate 37 of the positioning rail 4 towards the adjacent intermediate locating pin 36 in a direction D. During this movement and following the interaction between the end locating pin 36 and prong 23, the fork 10 is rotated anticlockwise in figures 1 and 3 to 5 about axis A until the first operating position is reached (figure 4); at the same time, the attachment portion 50 of the spring 25 is kept bearing against the edge 58 of slot 52, which therefore constitutes a unidirectional stop, while the attachment portion 51 of spring 25 is moved by portion 55 of the fork 10 along the slot 53 towards the edge 60 at the end.

As soon as the locating pin 36 at the end disengages from the jaws 22, the fork 10, due to the effect of the thrust of spring 25, snaps into the rest position (figure 3), in which the jaws 22 are facing the intermediate locating pin 36 of the positioning rail 4.

By continuing to adjust the back 2 and by moving the base unit 6 along plate 37 in direction D, the intermediate locating pin 36 is made to engage in the jaws 22, and due to the effect of the thrust of the intermediate locating pin 36 on the prong 23, the fork 10 rotates anticlockwise from the rest position in figure 3 to the attachment position.

Rotation of the fork 10 between the rest position and the attachment position causes the edge of the periphery 27 to slide along portion 31 of stop 11, until that portion snaps into engagement with the recess 32, locking the fork 10 in the attachment position with the intermediate locating pin 36.

The change to the next securing position along the length P is performed in a manner completely equivalent to that just described.

To return to the previous securing position, the arm 29 of stop 11 has to be operated again so as to disengage the portion 31 from the recess 32 in the fork 10 and to move the back 2 with respect to the body 3 so as to slide the base unit 6 along the plate 37 of the positioning rail 4 towards the end locating pin 36 in a direction E opposite to direction D. During this movement and following the interaction between the intermediate locating pin 36 and the prong 24, the fork 10 is rotated clockwise in figures 1 and 3 to 5 about axis A until the rest position is reached and the intermediate locating pin 36 can be disengaged from the jaws 22.

At this point, by continuing to move the base unit 6 along plate 37 in the direction E, an impact is caused between the prong 23 of the fork 10 and the end stop pin 36, causing further rotation of the fork 10 clockwise in figures 1 and 3 to 5 towards the second operating position (figure 5); at this stage, the attachment portion 51 of spring 25 is held to bear against the edge 59 of slot 53, which therefore constitutes a unidirectional stop, while attachment portion 50 of the spring 25 is moved by portion 55 of the fork 10 along the slot 52 towards the edge 61 at the end.

As soon as the end stop pin 36 is separated from prong 23 of fork 10, the latter, due to the effect of the thrust of spring 25 snaps into the rest position in which the jaws 22 are facing the end stop pin 36 of the positioning rail 4.

At this point, only a small movement of the base unit 6 along plate 37 in direction D is required to obtain engagement of the end stop pin 36 in the jaws 22 and rotation of the fork 10 anti-clockwise in figures 1 and 3 to 5, from the rest position to the attachment position, in which the portion 31 of stop 11 snaps into engagement with the recess 32, locking the fork 10.

The variant illustrated in figure 6 relates to an attachment mechanism 70, which is similar to the attachment mechanism 5, and the constituent parts of this are identified where possible by the same reference numbers as the corresponding parts of the attachment mechanism 5.

The attachment mechanism 70 differs from attachment mechanism 5 in that the base unit 6 as a whole forms a guide portion 71 which extends in an overhanging projection from the portion 40 on the opposite side of fork 10 and forms the boundary of a circumferential groove 72 having an angular extension with respect to axis A at least equal to the angular distance between the first and second operating positions of the fork 10.

In the intermediate position, the guide portion 71 has a pair of projections 73 which at opposite ends form stop surfaces 74, 75 for the relevant end portions 76, 77 of spring 25.

Instead of the interaction portion 55, the fork 10 has an appendage 78 forming an overhanging projection at right angles to the fork 10, engaging and able to slide in the groove 72, and acting as a stop from opposite sides in conjunction with the end portions 76, 77 of spring 25.

In the rest position of the fork 10 (figure 6), the end portions 76, 77 of spring 25 are arranged to bear from opposite sides on the surfaces 74, 75 of the projections 73 and the appendage 78.

During rotation of the fork 10 between the rest position and the first operating position, the end portion 76 of spring 25 is arranged to bear against the surfaces 74 of the projections 73, while the end portion 77 can move inside the groove 72 under the thrust of the appendage 78.

In a different way, during rotation of the fork 10 between the rest position and the second operating position, the end portion 77 of spring 25 is arranged to bear against the surfaces 75 of the projections 73, while the end portion 76 is able to move inside the groove 72 under the thrust of the appendage 78.

From an examination of the characteristics of the securing device 1 produced in accordance with this invention, the advantages which can be obtained with it are evident.

In particular, the device 1 places no limit to the number of positions which can be obtained for securing the back 2 to the body 3, except for the limit connected with the ergonomics of the seats. Moreover, the device 1 is almost completely silent, principally due to the fact that the fork 10 is coated on the outside in plastic material. Alternatively or in addition to the plastic coating of the fork 10, suitable damping elements could be inserted in the vicinity of the engagement contact zones between the fork 10 and the stop 11.

Finally it is clear that modifications and variants which do not go outside the protective scope of this invention may be made to the securing device 1.

In particular, the attachment mechanisms 5, 70 could be fixed to the body 3 of the motor vehicle and the positioning rail 4 could be fixed to the back 2.

## Claims

1. A device (1) for securing an adjustable back (2) of a seat to a motor vehicle body (3), comprising positioning devices (4) mounted on one of either the back (2) or the body (3) and an attachment mechanism (5, 70) mounted on the other of either the back (2) or the body (3) and designed to operate in conjunction with the positioning devices (4) mentioned, the attachment mechanism (5) comprising:
- a base unit (6);
- a fork (10) pivoting on the base unit (6) about a first fixed pin (12), having jaws (22) to engage with the positioning devices (4) and pressed by a first spring device (25) towards a rest position, in which engagement and disengagement between the jaws (22) and the positioning devices (4) are made possible; and
- a stop (11) pivoting on the base unit (6) about a second fixed pin (13), loaded by second spring device (26) towards the fork (10) and designed to snap into engagement with the fork (10) to lock it in a releasable manner in an attachment position, in which the positioning device (4) is engaged with the jaws (22);
**characterised in that** the positioning devices (4) are constituted by rails which comprise a number of stop pins (36) arranged along their length (P) through which the position of the seat back (2) can be adjusted with respect to the vehicle body (3) and designed to engage with the fork (10) in the attachment position to determine different positions for securing the back (2) to the body (3), and that the fork (10) is able to rotate about the first pin (12) against the action of the first spring device (25) between a first and a second operating position arranged at an angle on opposite sides of the rest and attachment positions, so as to allow the stop pins (36) and the fork (10) to slide relative to each other during movements of the seat back (2) between adjacent securing positions.

2. A device in accordance with claim 1 **characterised in that** the attachment position of the fork (10) is placed at an angle between the rest position and the second operating position of the fork (10).

3. A device in accordance with claim 1 or 2, **characterised in that** the first spring device comprises a single helical spring (25) wound around the first pin (12) and having a first and a second end portion (50, 51; 76, 77) designed to act in conjunction on opposite sides with an interaction portion (55, 78) of the fork (10), and that the base unit (6) comprises a first unidirectional stop device (58, 74) to lock the first end portion (50, 76) of the spring (25) during rotation of the fork (10) between the rest position and the second operating position and a second unidirectional stop device (59, 75) to lock the said second end portion (51, 77) of the spring (25) during rotation of the fork (10) between the rest position and the second operating position.

4. A device in accordance with claim 3, **characterised in that** the first and second end portions (50, 51) of the spring (25) are bent in a direction parallel to the respective axes (A, B) of the first and second pins (12, 13) and are engaged and able to slide in a first and a second slot (52, 53) respectively, of elongated curved shape, made in the base unit (6) and extending along arcs of circumference having a centre of curvature coinciding with the axis (A) of the first pin (12), the first and second unidirectional stop devices mentioned being formed by respective end edges (58, 59), adjacent to each other, of the first and second slots (52, 53).

5. A device in accordance with claim 4, **characterised in that** the first slot (52) has an angular extension with respect to axis (A) of the first pin (12) at least equal to the angular distance between the rest position and the second operating position of the fork (10), and that the second slot (53) has an angular extension with respect to axis (A) of the first pin (12) at least equal to the angular distance between the rest position and the first operating position of the fork (10).

6. A device in accordance with claim 4 or 5, **characterised in that** the second slot (53) has an angular extension with respect to axis (A) of the first pin (12) which is greater than the angular extension of the first slot (52).

7. A device in accordance with any one of claims 4 to 6, **characterised in that** the fork (10) has a third elongated slot (54), substantially the shape of an arc of circumference with the centre of curvature coinciding with the axis (A) of the first pin (12) and engaged so as to allow sliding by the second end portion (51) of the spring (25), the interaction portion (55) of the fork (10) being bounded on opposite sides by a section (56) of the edge of the periphery (27) of the fork (10), designed to operate in conjunction with the first end portion (50) of the spring (25), and by an end edge (57) of the third slot (54) adjacent to the section (56) of the edge of the periphery (27) of the fork (10).

8. A device in accordance with claim 7, **characterised in that** the first and third slots (52, 54) have substantially the same angular extension.

9. A device in accordance with claim 3 **characterised in that** the base unit (6) comprises guiding devices (71, 72) extending circumferentially around the first pin (12) and engaged so as to allow sliding by the interaction portion (78) of the fork (10), and at least one projection (73) having respective stop surfaces (74, 75) on opposite sides designed to act in conjunction with the first and second end portions (76, 77) of the spring (25) and respectively constituting the first and second unidirectional stop devices.

10. A device in accordance with claim 9, **characterised in that** the interaction portion of the fork (10) comprises an appendage (78) forming an overhanging projection from the fork (10), and that the guidance device comprises a groove (72) in which the appendage (78) engages and slides, and having an angular extension with respect to the first pin (12) at least equal to the angular distance between the first and second operating positions of the fork (10).

11. A device in accordance with any one of the preceding claims, **characterised in that** the locating pins (36) have a portion (38) which acts in conjunction with the fork (10), substantially cylindrical, and that the jaws (22) in the fork (10) are substantially C-shaped.

12. A device in accordance with any one of the preceding claims, **characterised in that** the locating pins (36) are permanently attached at one end to the vehicle body (3) and are connected to each other at the opposite end by an elongated plate (37) extending at right angles to the locating pins (36), determining the length (P) through which the position of the seat back (2) can be adjusted, and designed to constitute a guide for a sliding engagement section (42, 43) of the base unit (6).

13. A device in accordance with any one of the preceding claims, **characterised in that** the stop (11) comprises a first operating arm (29) and a second arm (30) of interaction with the fork (10) having an engagement portion (31) designed to snap into engagement in a peripheral recess (32) in the fork (10).

14. A device in accordance with any one of the previous claims, **characterised in that** the fork (10) is produced at least externally of plastic material.

## Patentansprüche

1. Vorrichtung (1) zum Sichern einer verstellbaren Sitzrückenlehne (2) an einer Kraftfahrzeugkarosserie (3), die Positioniervorrichtungen (4), die entweder an der Lehne (2) oder an der Karosserie (3) angebracht sind, und eine Befestigungsvorrichtung (5, 70) aufweist, die ebenfalls entweder an der Lehne (2) oder an der Karosserie (3) angebracht ist und sich zusammen mit den erwähnten Positioniervorrichtungen (4) betätigen soll, wobei die Befestigungsvorrichtung (5) aufweist:
- eine Basiseinheit (6);
- eine Gabel (10), die an der Basiseinheit (6) um einen ersten feststehenden Stift (12) schwenkt, Klemmbacken (22) aufweist, um mit den Positioniervorrichtungen (4) in Eingriff zu gelangen, und durch eine erste Federvorrichtung (25) in Richtung einer Ruhestellung gedrückt wird, in der Eingreifen und Lösen der Klemmbacken (22) und der Positioniervorrichtungen (4) möglich werden; und
- einen Anschlag (11), der an der Basiseinheit (6) um einen zweiten feststehenden Stift (13) schwenkt, der in Richtung der Gabel (10) durch eine zweite Federvorrichtung (26) belastet wird und in Eingriff mit der Gabel (10) schnappen soll, um diese in lösbarer Weise in einer gehaltenen Stellung zu verrasten, in der sich die Positioniervorrichtung (4) mit den Klemmbacken (22) in Eingriff befindet;
**dadurch gekennzeichnet, dass** die Positioniervorrichtungen (4) durch Schienen gebildet sind, die eine Anzahl von Anschlagstiften (36) aufweisen, die ihrer Länge (P) nach angeordnet sind, durch die die Stellung der Sitzrückenlehne im Hinblick auf die Kraftfahrzeugkarosserie (3) verstellt werden kann, und so ausgelegt sind, um in der gehaltenen Stellung in Eingriff mit der Gabel (10) zu gelangen, um verschiedene Stellungen zum Sichern der Lehne (2) an der Karosserie (3) festzulegen, und dass die Gabel (10) in der Lage ist, um den ersten Stift (12) entgegen der Wirkung der ersten Federvorrichtung (25) zwischen einer ersten und einer zweiten Betätigungsstellung zu rotieren, die auf gegenüberliegenden Seiten der Ruhe- und gehaltenen Stellungen unter einem Winkel angeordnet ist, um die Anschlagstifte (36) und die Gabel (10) in die Lage zu versetzen, relativ zueinander bei Bewegungen der Rückenlehne (2) zwischen angrenzenden gesicherten Stellungen zu gleiten.

2. Vorrichtung nach Anspruch 1, **dadurch gekennzeichnet, dass** sich die Gabel (10) bei gehaltener Stellung in einem Winkel zwischen der Ruhe- und der zweiten Betätigungsstellung der Gabel (10) befindet.

3. Vorrichtung nach Anspruch 1 oder 2, **dadurch gekennzeichnet, dass** die erste Federvorrichtung eine einzelne Schraubenfeder (25) aufweist, die um den ersten Stift (12) gewickelt ist und einen ersten und einen zweiten Endabschnitt (50, 51; 76, 77) besitzt, der auf gegenüberliegenden Seiten mit einem zusammenwirkenden Abschnitt (55, 78) der Gabel (10) zusammenwirken soll, und dass die Basiseinheit (6) eine erste unidirektionale Anschlagvorrichtung (58, 74) aufweist, um den ersten Endabschnitt (50, 76) der Feder (25) während der Rotation der Gabel (10) zwischen der Ruhestellung und der zweiten Betätigungsstellung zu verrasten, und eine zweite unidirektionale Anschlagvorrichtung (59, 75) aufweist, um den zweiten Endabschnitt (51, 77) der Feder (25) während der Rotation der Gabel (10) zwischen der Ruhestellung und der zweiten Betätigungsstellung zu verrasten.

4. Vorrichtung nach Anspruch 3, **dadurch gekennzeichnet, dass** die ersten und zweiten Endabschnitte (50, 51) der Feder (25) in einer Richtung parallel zu den entsprechenden Achsen (A, B) der ersten und zweiten Stifte (12, 13) gebogen sind und in Eingriff und in der Lage sind, in einem ersten bzw. einem zweiten Schlitz (52, 53) von länglicher, gebogener Form zu gleiten, der in der Basiseinheit (6) gebildet ist und sich entlang von Umfangsbögen erstreckt, deren Krümmungsmittelpunkt mit der Achse (A) des ersten Stiftes (12) zusammenfällt, wobei die erwähnten ersten und zweiten unidirektionalen Anschlagvorrichtungen durch entsprechende, einander benachbarte Endkanten (58, 59) der ersten und zweiten Schlitze (52, 53) gebildet sind.

5. Vorrichtung nach Anspruch 4, **dadurch gekennzeichnet, dass** der erste Schlitz (52) eine Winkelerstreckung hinsichtlich der Achse (A) des ersten Stiftes (12) hat, die zumindest dem Winkelabstand zwischen der Ruhestellung und der zweiten Betätigungsstellung der Gabel (10) entspricht, und dass der zweite Schlitz (53) eine Winkelerstreckung hinsichtlich der Achse (A) des ersten Stiftes (12) hat, die zumindest dem Winkelabstand zwischen der Ruhestellung und der ersten Betätigungsstellung der Gabel (10) entspricht.

6. Vorrichtung nach Anspruch 4 oder 5, **dadurch gekennzeichnet, dass** der zweite Schlitz (53) eine Winkelerstreckung hinsichtlich der Achse (A) des ersten Stiftes (12) hat, die größer ist als die Winkelerstreckung des ersten Schlitzes (52).

7. Vorrichtung nach einem der Ansprüche 4 bis 6, **dadurch gekennzeichnet, dass** die Gabel (10) einen dritten Längsschlitz (54) aufweist, der im Wesentlichen die Form eines Umfangsbogens hat, wobei der Kurvenmittelpunkt mit der Achse (A) des ersten Stiftes (12) zusammenfällt und so im Eingriff ist, dass ein Gleiten des zweiten Endabschnitts (51) der Feder (25) möglich ist, wobei der zusammenwirkende Abschnitt (55) der Gabel (10) auf gegenüberliegenden Seiten geführt wird durch ein Teilstück (56) am Umfangsrand (27) der Gabel (10), um in Verbindung mit dem ersten Endabschnitt (50) der Feder (25) betätigt zu werden, und durch eine Endkante (57) des dritten Schlitzes (54), der dem Teilstück (56) des Umfangsrands (27) der Gabel (10) benachbart ist.

8. Vorrichtung nach Anspruch 7, **dadurch gekennzeichnet, dass** die ersten und dritten Schlitze (52, 54) im Wesentlichen dieselbe Winkelerstreckung aufweisen.

9. Vorrichtung nach Anspruch 3, **dadurch gekennzeichnet, dass** die Basiseinheit (6) Führungsmittel (71, 72), die sich in Umfangsrichtung um den ersten Stift (12) erstrecken und so im Eingriff sind, dass ein Gleiten durch den zusammenwirkenden Abschnitt (78) der Gabel (10) möglich ist, und zumindest einen Vorsprung (73) aufweist, der entsprechende Anschlagflächen (74, 75) auf gegenüberliegenden Seiten besitzt, um mit den ersten und zweiten Endabschnitten (76, 77) der Feder (25) zusammenzuwirken bzw. die ersten und zweiten unidirektionalen Anschlagvorrichtungen darstellt.

10. Vorrichtung nach Anspruch 9, **dadurch gekennzeichnet, dass** der zusammenwirkende Abschnitt der Gabel (10) einen Fortsatz (78) aufweist, der einen von der Gabel (10) überstehenden Vorsprung bildet, und dass das Führungsmittel eine Nut (72) aufweist, in die der Fortsatz (78) eingreift und darin gleitet, und eine Winkelerstreckung im Hinblick auf den ersten Stift (12) hat, die wenigstens dem Winkelabstand zwischen der ersten und zweiten Betätigungsstellung der Gabel (10) entspricht.

11. Vorrichtung nach einem der vorherigen Ansprüche, **dadurch gekennzeichnet, dass** die Fixierstifte (36) einen im Wesentlichen zylindrischen Abschnitt (38) aufweisen, der mit der Gabel (10) zusammenwirkt, und dass die Klemmbacken (22) in der Gabel (10) im Wesentlichen C-förmig sind.

12. Vorrichtung nach einem der vorherigen Ansprüche, **dadurch gekennzeichnet, dass** die Fixierstifte (36) ständig an einem Ende an der Fahrzeugkarosserie (3) gehalten sind und miteinander am gegenüberliegenden Ende durch eine längsgestreckte Platte (37) verbunden sind, die sich rechtwinklig zu den Fixierstiften (36) erstreckt, die die Länge (P) bestimmt, durch die die Stellung der Sitzrückenlehne (2) verstellt werden kann, und so ausgelegt ist, dass sie eine Führung für ein Teilstück (42, 43) zum gleitenden Eingriff der Basiseinheit (6) darstellt.

13. Vorrichtung nach einem der vorherigen Ansprüche, **dadurch gekennzeichnet, dass** der Anschlag (11) einen ersten Betätigungsarm (29) und einen zweiten Arm (30) zum Zusammenwirken mit der Gabel (10) aufweist, mit einem Eingriffsabschnitt (31), der so ausgelegt ist, dass er in Eingriff mit der in Umfangsrichtung angeordneten Aussparung (32) in der Gabel (10) schnappen kann.

14. Vorrichtung nach einem der vorherigen Ansprüche, **dadurch gekennzeichnet, dass** die Gabel (10) zumindest außen aus Kunststoffmaterial hergestellt ist.

## Revendications

1. Dispositif (1) pour fixer un dossier (2) de siège réglable à la carrosserie d'un véhicule automobile (3), comprenant des dispositifs de positionnement (4) montés sur l'un du dossier (2) ou de la carrosserie (3) et un mécanisme d'attache (5, 70) monté sur l'autre du dossier (2) ou de la carrosserie (3) et conçu pour fonctionner en rapport avec les dispositifs de positionnement (4) mentionnés, le mécanisme d'attache (5) comprenant :
une unité de base (6) ;
une fourche (10) pivotant sur l'unité de base (6) autour d'une première broche fixe (12), ayant des mâchoires (22) pour venir en prise avec les dispositifs de positionnement (4) et pressée par un premier dispositif ressort (25) vers une position de repos, dans lequel la mise en prise et le dégagement entre les mâchoires (22) et les dispositifs de positionnement (4) sont rendus possibles ; et
une butée (11) pivotant sur l'unité de base (6) autour d'une seconde broche fixe (13), chargée par le second dispositif ressort (26) vers la fourche (10) et conçue pour s'engager d'un coup avec la fourche (10) afin de la verrouiller d'une façon libérable dans une position d'attache, dans lequel le dispositif de positionnement (4) vient en prise avec les mâchoires (22) ;
**caractérisé en ce que** les dispositifs de positionnement (4) sont constitués par des rails qui comprennent plusieurs broches de butée (36) agencées sur leur longueur (P) sur laquelle la position du dossier de siège (2) peut être réglée par rapport à la carrosserie (3) du véhicule et conçus pour venir en prise avec la fourche (10) dans la position d'attache afin de déterminer différentes positions pour fixer le dossier (2) à la carrosserie (3), et **en ce que** la fourche (10) peut tourner autour de la première broche (12) contre l'action du premier dispositif ressort (25) entre une première et une seconde positions de fonctionnement agencées à un angle sur les côtés opposés des positions de repos et d'attache, afin de permettre aux broches de butée (36) et à la fourche (10) de coulisser les unes par rapport aux autres pendant les mouvements du dossier de siège (2) entre des positions de fixation adjacentes.

2. Dispositif selon la revendication 1, **caractérisé en ce que** la position d'attache de la fourche (10) est placée à un angle entre la position de repos et la seconde position de fonctionnement de la fourche (10).

3. Dispositif selon la revendication 1 ou 2, **caractérisé en ce que** le premier dispositif ressort comprend un ressort hélicoïdal unique (25) enroulé autour de la première broche (12) et ayant une première et une seconde parties d'extrémité (50, 51 ; 76, 77) conçues pour agir ensemble sur des côtés opposés avec une partie d'interaction (55, 78) de la fourche (10), et **en ce que** l'unité de base (6) comprend un premier dispositif d'arrêt unidirectionnel (58, 74) pour verrouiller la première partie d'extrémité (50, 76) du ressort (25) pendant la rotation de la fourche (10) entre la position de repos et la seconde position de fonctionnement et un second dispositif d'arrêt unidirectionnel (59, 75) pour verrouiller ladite seconde partie d'extrémité (51, 77) du ressort (25) pendant la rotation de la fourche (10) entre la position de repos et la seconde position de fonctionnement.

4. Dispositif selon la revendication 3, **caractérisé en ce que** les première et seconde parties d'extrémité (50, 51) du ressort (25) sont pliées dans une direction parallèle aux axes respectifs (A, B) des première et seconde broches (12, 13) et sont en prise et capables de coulisser dans une première et une deuxième fentes (52, 53) respectivement, de forme courbe allongée, faites dans l'unité de base (6) et s'étendant le long d'arcs de circonférence ayant un centre de courbure coïncidant avec l'axe (A) de la première broche (12), les premier et second dispositifs d'arrêt unidirectionnels mentionnés étant formés par les bords d'extrémité respectifs (58, 59), adjacents l'un à l'autre, des première et deuxième fentes (52, 53).

5. Dispositif selon la revendication 4, **caractérisé en ce que** la première fente (52) a une extension angulaire par rapport à l'axe (A) de la première broche (12) au moins égale à la distance angulaire entre la position de repos et la seconde position de fonctionnement de la fourche (10), et **en ce que** la deuxième fente (53) a une extension angulaire par rapport à l'axe (A) de la première broche (12) au moins égale à la distance angulaire entre la position de repos et la première position de fonctionnement de la fourche (10).

6. Dispositif selon la revendication 4 ou 5, **caractérisé en ce que** la deuxième fente (53) a une extension angulaire par rapport à l'axe (A) de la première broche (12) qui est supérieure à l'extension angulaire de la première fente (52).

7. Dispositif selon l'une quelconque des revendications 4 à 6, **caractérisé en ce que** la fourche (10) a une troisième fente allongée (54), ayant sensiblement la forme d'un arc de circonférence avec le centre de courbure coïncidant avec l'axe (A) de la première broche (12) et en prise afin de permettre le coulissage par la seconde partie d'extrémité (51) du ressort (25), la partie d'interaction (55) de la fourche (10) étant bordée sur les côtés opposés par une section (56) du bord de la périphérie (27) de la fourche (10), conçue pour fonctionner avec la première partie d'extrémité (50) du ressort (25), et par un bord d'extrémité (57) de la troisième fente (54) adjacent à la section (56) du bord de la périphérie (27) de la fourche (10).

8. Dispositif selon la revendication 7, **caractérisé en ce que** les première et troisième fentes (52, 54) ont sensiblement la même extension angulaire.

9. Dispositif selon la revendication 3, **caractérisé en ce que** l'unité de base (6) comprend des dispositifs de guidage (71, 72) s'étendant circonférentiellement autour de la première broche (12) et en prise afin de permettre le coulissage par la partie d'interaction (78) de la fourche (10), et au moins une saillie (73) ayant des surfaces d'arrêt respectives (74, 75) sur les côtés opposés conçues pour agir avec les première et seconde parties d'extrémité (76, 77) du ressort (25) et constituant respectivement les premier et second dispositifs d'arrêt unidirectionnels.

10. Dispositif selon la revendication 9, **caractérisé en ce que** la partie d'interaction de la fourche (10) comprend un appendice (78) formant une saillie en surplomb depuis la fourche (10), et **en ce que** le dispositif de guidage comprend une rainure (72) dans laquelle l'appendice (78) vient en prise et coulisse, et ayant une extension angulaire par rapport à la première broche (12) au moins égale à la distance angulaire entre les première et seconde positions de fonctionnement de la fourche (10).

11. Dispositif selon l'une quelconque des revendications précédentes, **caractérisé en ce que** les broches de localisation (36) ont une partie (38) qui agit avec la fourche (10), sensiblement cylindrique, et **en ce que** les mâchoires (22) dans la fourche (10) sont sensiblement en forme de C.

12. Dispositif selon l'une quelconque des revendications précédentes, **caractérisé en ce que** les broches de localisation (36) sont fixées en permanence à une extrémité de la carrosserie (3) du véhicule et sont connectées l'une à l'autre à l'extrémité opposée par une plaque allongée (37) s'étendant à angle droit vers les broches de localisation (36), déterminant la longueur (P) sur laquelle la position du dossier de siège (2) peut être réglée, et conçues pour constituer un guide pour une section de prise coulissante (42, 43) de l'unité de base (6).

13. Dispositif selon l'une quelconque des revendications précédentes, **caractérisé en ce que** la butée (11) comprend un premier bras de fonctionnement (29) et un second bras (30) d'interaction avec la fourche (10) ayant une partie en prise (31) conçue pour venir en prise dans un retrait périphérique (32) dans la fourche (10).

14. Dispositif selon l'une quelconque des revendications précédentes, **caractérisé en ce que** la fourche (10) est produite au moins à l'extérieur en matière plastique.
